# EUROPEAN PATENT APPLICATION

(11) **EP 4 268 639 A1**
(43) Date of publication of application: **01.11.2023**
(21) Application number: 23169769.9
(22) Date of filing: 25.04.2023
(51) Int. Cl.: A24F 40/50, H02J 7/00, H02M 3/158

(54) **METHOD, APPARATUS, AND SYSTEM FOR CONTROLLING ELECTRONIC VAPORIZATION DEVICE, AND ELECTRONIC VAPORIZATION DEVICE**

(30) Priority: 29.04.2022 CN 202210464065
(71) Applicant: Shenzhen Smoore Technology Limited, Shenzhen, Guangdong 518102 (CN)
(72) Inventor: MEI, Jiagang, Shenzhen (CN); ZHANG, Chaozheng, Shenzhen (CN); SHI, Ruquan, Shenzhen (CN); DU, Yu, Shenzhen (CN)
(74) Representative: Michalski Hüttermann & Partner Patentanwälte mbB

(57) **Abstract**

A method for controlling an electronic vaporization device includes: obtaining an output voltage sampling value of a pulse boost circuit of the electronic vaporization device in real time; determining, according to the output voltage sampling value and a preset cell voltage, whether the output voltage sampling value is greater than the preset cell voltage; performing, according to the output voltage sampling value and the preset cell voltage if the output voltage sampling value is greater than the preset cell voltage and is less than or equal to a preset voltage threshold, pulse boost regulation on the pulse boost circuit in a first regulation manner; and performing, according to the output voltage sampling value and the preset cell voltage if the output voltage sampling value is greater than the preset voltage threshold, pulse boost regulation on the pulse boost circuit in a second regulation manner.

## Description

### TECHNICAL FIELD

This application relates to the field of electronic vaporization technologies, and in particular, to a method, an apparatus, and a system for controlling an electronic vaporization device, and an electronic vaporization device.

### BACKGROUND

An electronic vaporization device is an electronic product that can generate smoke through inhalation of a user, and is very popular among users. During an operating process, the electronic vaporization device mainly supplies power in a direct current chopper output manner, to maintain a stable output voltage.

As use time of a cell of the electronic vaporization device increases, the capacity thereof may gradually decrease. In the direct chopper output mode, as the capacity of the cell decreases, the output power may also change significantly, resulting in a large difference in operating states of the electronic vaporization device.

### SUMMARY

Based on this, it is necessary to provide a method, an apparatus, and a system for controlling an electronic vaporization device, and an electronic vaporization device, to alleviate a problem of a noticeable change in output power caused by a reduction of power of a cell of an electronic vaporization device.

According to a first aspect of the present application, a method for controlling an electronic vaporization device is provided, including: obtaining an output voltage sampling value of a pulse boost circuit of an electronic vaporization device in real time; determining, according to the output voltage sampling value and a preset cell voltage, whether the output voltage sampling value is greater than the preset cell voltage; performing, according to the output voltage sampling value and the preset cell voltage if the output voltage sampling value is greater than the preset cell voltage and is less than or equal to a preset voltage threshold, pulse boost regulation on the pulse boost circuit in a first regulation manner; and performing, according to the output voltage sampling value and the preset cell voltage if the output voltage sampling value is greater than the preset voltage threshold, pulse boost regulation on the pulse boost circuit in a second regulation manner.

According to the foregoing method for controlling the electronic vaporization device, when a pulse boost circuit starts operation and provides an operating voltage for a vaporizer of an electronic vaporization device, an output voltage sampling value of the pulse boost circuit can be obtained in real time, and is analyzed with reference to a preset cell voltage, to determine whether a voltage regulation condition is met currently. If the output voltage sampling value is between the preset cell voltage and a preset voltage threshold, pulse boost regulation is performed on the pulse boost circuit in a first regulation manner; and if the output voltage sampling value is greater than the preset voltage threshold, pulse boost regulation is performed on the pulse boost circuit in a second regulation manner, to slow down the decreasing rate of output power outputted by the pulse boost circuit to the vaporizer. Through the foregoing solution, when a cell voltage of the electronic vaporization device is insufficient, the power loss of a cell can be effectively reduced by a feedback adjustment, thereby slowing down the decreasing rate of the output power, and avoiding a greater difference between working states of the electronic vaporization device before and after caused by a greater change in the output power.

In some embodiments, performing, according to the output voltage sampling value and the preset cell voltage, pulse boost regulation on the pulse boost circuit in the first regulation manner includes: controlling, according to the output voltage sampling value and the preset cell voltage, the pulse boost circuit to output a voltage signal corresponding to the preset cell voltage for a second preset duration after outputting a voltage signal corresponding to the output voltage sampling value for a first preset duration.

In some embodiments, performing, according to the output voltage sampling value and the preset cell voltage, pulse boost regulation on the pulse boost circuit in the second regulation manner includes: controlling, according to the output voltage sampling value and the preset cell voltage, the pulse boost circuit to output a voltage signal corresponding to the preset cell voltage for a fourth preset duration after outputting a voltage signal corresponding to the preset voltage threshold for a third preset duration.

In some embodiments, before obtaining the output voltage sampling value of the pulse boost circuit of the electronic vaporization device in real time, the method further includes: obtaining a cartridge insertion/removal detection signal of the electronic vaporization device; and controlling, if the cartridge insertion/removal detection signal is a working state signal, the pulse boost circuit to start operation, and performing the obtaining the output voltage sampling value of the pulse boost circuit of the electronic vaporization device in real time.

In some embodiments, after obtaining the cartridge insertion/removal detection signal of the electronic vaporization device, the method further includes: switching off the pulse boost circuit if the cartridge insertion/removal detection signal is a low-power-consumption state signal.

According to a second aspect of the present application, an apparatus for controlling an electronic vaporization device is provided, including: a voltage obtaining module configured to obtain an output voltage sampling value of a pulse boost circuit of the electronic vaporization device in real time; a voltage regulation determining module configured to determine whether the output voltage sampling value is greater than a preset cell voltage; and a voltage regulation module configured to: perform, according to the output voltage sampling value and a preset cell voltage if the output voltage sampling value is greater than the preset cell voltage and is less than or equal to a preset voltage threshold, pulse boost regulation on the pulse boost circuit in a first regulation manner, and perform, according to the output voltage sampling value and the preset cell voltage if the output voltage sampling value is greater than the preset voltage threshold, pulse boost regulation on the pulse boost circuit in a second regulation manner.

According to a third aspect of the present application, a system for controlling an electronic vaporization device is provided, including a memory and a processor. The memory stores a computer program, and the processor, when executing the computer program, implements the foregoing method for controlling the electronic vaporization device.

In some embodiments, the system further includes a pulse boost circuit, where the processor, a power supply of the electronic vaporization device, and a vaporizer of the electronic vaporization device are respectively connected to the pulse boost circuit.

In some embodiments, the pulse boost circuit includes a boost circuit, a pulse control circuit, and an energy storage circuit. The boost circuit is connected to the power supply of the electronic vaporization device. The boost circuit is connected to the pulse control circuit. The pulse control circuit is connected to the energy storage circuit. The energy storage circuit is connected to the vaporizer of the electronic vaporization device. The boost circuit, the pulse control circuit, and the energy storage circuit are respectively connected to the processor.

In some embodiments, the boost circuit includes a first capacitor, a first resistor, a first switch device, a first diode, and a boost inductor. A first end of the first capacitor is connected to the power supply of the electronic vaporization device, and a second end of the first capacitor is grounded. A first end of the first resistor is connected to the first end of the first capacitor and a first end of the first switch device, and a second end of the first resistor is connected to a control end of the first switch device and the processor. A second end of the first switch device is connected to a cathode of the first diode and a first end of the boost inductor, and a second end of the boost inductor is connected to the pulse control circuit. An anode of the first diode is connected to the second end of the first capacitor and the pulse control circuit.

In some embodiments, the pulse control circuit includes a second resistor, a second switch device, and a second diode. A first end of the second switch device is connected to the boost circuit and an anode of the second diode. A cathode of the second diode is connected to the energy storage circuit. A control end of the second switch device is connected to a first end of the second resistor and the processor. A second end of the second resistor is connected to the boost circuit and the second end of the second switch device. A second end of the second switch device is connected to the energy storage circuit.

In some embodiments, the energy storage circuit includes a second capacitor and a third switch device. A first end of the second capacitor is connected to the pulse control circuit and a vaporizer of the electronic vaporization device. A second end of the second capacitor is connected to a first end of the third switch device. A second end of the third switch device is connected to the pulse control circuit and the vaporizer. Acontrol end of the third switch device is connected to the processor.

In some embodiments, the system further includes a status acquisition apparatus. The pulse boost circuit is connected to the status acquisition apparatus and the vaporizer, the status acquisition apparatus is connected to the processor, and the status acquisition apparatus is configured to acquire an output voltage sampling value of the pulse boost circuit.

In some embodiments, the status acquisition apparatus is further configured to acquire a cartridge insertion/removal detection signal, and send the cartridge insertion/removal detection signal to the processor.

In some embodiments, the status acquisition apparatus includes a third resistor, a fourth resistor, and a fifth resistor. A first end of the fourth resistor is connected to the power supply. A second end of the fourth resistor is connected to the pulse boost circuit, a first end of the third resistor, and the vaporizer. A second end of the third resistor is connected to the processor and a first end of the fifth resistor. A second end of the fifth resistor is connected to the processor.

According to a fourth aspect of the present application, an electronic vaporization device is provided, including a vaporizer and the foregoing system for controlling the electronic vaporization device.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 is a schematic flowchart of a method for controlling an electronic vaporization device according to some embodiments of this application;
FIG. 2 is a schematic flowchart of a method for controlling an electronic vaporization device according to some embodiments of this application;
FIG. 3 is a schematic diagram of comparison between output power in technical solutions of this application and direct current chopper output power;
FIG. 4 is a schematic flowchart of a method for controlling an electronic vaporization device according to some embodiments of this application;
FIG. 5 is a schematic structural diagram of an apparatus for controlling an electronic vaporization device according to some embodiments of this application;
FIG. 6 is a schematic structural diagram of an apparatus for controlling an electronic vaporization device according to some embodiments of this application;
FIG. 7 is a schematic structural diagram of a system for controlling an electronic vaporization device according to some embodiments of this application;
FIG. 8 is a schematic structural diagram of a system for controlling an electronic vaporization device according to some embodiments of this application;
FIG. 9 is a schematic diagram of a system for controlling an electronic vaporization device according to some embodiments of this application;
FIG. 10 is a schematic structural diagram of a pulse boost circuit according to some embodiments of this application;
FIG. 11 is a schematic structural diagram of a system for controlling an electronic vaporization device according to some embodiments of this application; and
FIG. 12 is a schematic structural diagram of a circuit of a cartridge recognition part according to some embodiments of this application.

### DETAILED DESCRIPTION

To help understand this application, this application is described more fully with reference to the related accompanying drawings in the following. The accompanying drawings show exemplary embodiments of this application. However, this application may be implemented in many different forms, and is not limited to the embodiments described in this specification. On the contrary, the embodiments are provided to make understanding of the disclosed content of this application more comprehensive.

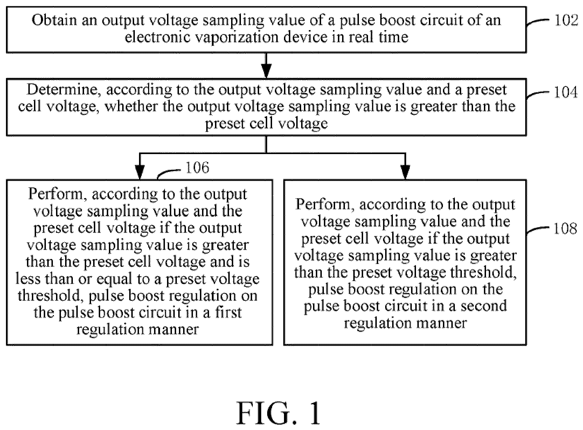

Referring to FIG. 1, a method for controlling an electronic vaporization device includes step 102, step 104, step 106, and step 108.

Step 102: Obtain an output voltage sampling value of a pulse boost circuit of an electronic vaporization device in real time.

Specifically, the electronic vaporization device is a device that, when a power supply is turned on, evaporates e-liquid adsorbed on oil-guiding cotton by using a heating wire of a vaporizer, to generate smoke for a user to inhale. The pulse boost circuit is a circuit in which, a switch device performs an action under control of an outputted pulse width modulation (PWM) signal, a voltage of a power supply is fully applied to a boost inductor, and then electrical energy of the power supply and the inductor is transferred to a load and an energy storage capacitor to charge the energy storage capacitor, so as to realize a purpose of boosting.

In the electronic vaporization device provided in this application, the power supply is connected to a vaporizer of the electronic vaporization device through the pulse boost circuit, to provide electrical energy required for the vaporizer to work, so as to ensure that the vaporizer can normally vaporize. For the power supply (namely, a cell) connected to the pulse boost circuit, because power of the cell gradually reduces as a working time of the electronic vaporization device increases, if an operating state of the pulse boost circuit remains unchanged, a voltage finally transmitted to the vaporizer also reduces accordingly, resulting in a more noticeable change in output power, and resulting in a greater difference between working states of the electronic vaporization device before and after, so that the taste of inhalation is seriously affected.

To avoid this situation, in the technical solutions of this application, in a process in which the pulse boost circuit outputs a voltage to supply power to the vaporizer, the output voltage of the pulse boost circuit can be detected in real time, that is, the output voltage sampling value thereof is obtained. In this way, when the voltage sampling value has a noticeable change, a feedback adjustment is performed, thereby preventing the output power from having a noticeable change, ensuring that the working states of the electronic vaporization device before and after are consistent, and then ensuring that tastes of inhalation of the user before and after are consistent.

It should be noted that, the obtaining manner of the output voltage sampling value is not unique. In a more detailed embodiment, a status acquisition apparatus is further disposed between the pulse boost circuit and the vaporizer, and the status acquisition apparatus is connected to the processor. The status acquisition apparatus may sample an output of the pulse boost circuit to obtain the output voltage sampling value and send the output voltage sampling value to the processor, which indicates that the output voltage sampling value is obtained.

It may be understood that, in other embodiments, a voltage sensor, a voltage transformer, or the like may alternatively be disposed between the pulse boost circuit and the vaporizer, and the output voltage sampling value is obtained by direct sampling, and is then sent to the processor in a wired or wireless communication manner.

Step 104: Determine, according to the output voltage sampling value and a preset cell voltage, whether the output voltage sampling value is greater than the preset cell voltage.

Specifically, the preset cell voltage is a voltage value preset in the processor according to the cell of the electronic vaporization device, and a specific value thereof is not unique, and is also different according to different cell models selected in the electronic vaporization device. For example, in a more detailed embodiment, the preset cell voltage may be set to a voltage corresponding to the cell of the electronic vaporization device when the electronic vaporization device is at delivery.

After obtaining the output voltage sampling value outputted by the pulse boost circuit to the vaporizer, the processor analyzes with reference to the stored preset cell voltage, to determine whether the output voltage sampling value is greater than the preset cell voltage, that is, determine whether a situation of a change in the output power and a greater difference between tastes of inhalation before and after is caused when the cell voltage has a greater change as the use time of the electronic vaporization device increases. If the analysis shows that the output voltage sampling value is greater than the preset cell voltage, it is considered that a voltage regulation condition is met, which indicates that a reduction of the cell voltage in this case causes a change in the taste of inhalation. If the analysis shows that the output voltage sampling value is less than or equal to the preset cell voltage, it is considered that the voltage regulation condition is not met, which indicates that, in this case, the cell voltage has no change, or the cell voltage has a small change, which is not enough to cause a change in the taste of inhalation of the electronic vaporization device.

Step 106: Perform, according to the output voltage sampling value and the preset cell voltage if the output voltage sampling value is greater than the preset cell voltage and is less than or equal to a preset voltage threshold, pulse boost regulation on the pulse boost circuit in a first regulation manner.

Specifically, when the processor analyzes with reference to the output voltage sampling value and the preset cell voltage to determine whether the voltage regulation condition is met (that is, whether the output voltage sampling value is greater than the preset cell voltage), if the analysis shows that the voltage regulation condition is met, that is, the analysis shows that the output voltage sampling value is greater than the preset cell voltage, the processor performs pulse boost regulation on the pulse boost circuit, to slow down the decreasing rate of the output power of the pulse boost circuit, and ensure the consistency of the tastes of inhalation of the electronic vaporization device before and after.

It may be understood that, in an embodiment, to ensure that the decreasing rate of the output power of the pulse boost circuit can be slowed down in time by a feedback adjustment each time the cell voltage changes, after performing pulse boost regulation once each time, the processor returns to the operation of obtaining an output voltage sampling value of a pulse boost circuit, then analyzes whether the voltage regulation condition is met, and performs pulse boost regulation again if the voltage regulation condition is met again.

The first regulation manner is a regulation manner of the pulse boost circuit implemented according to the output voltage sampling value. A further description is made by using the voltage regulation condition as whether the output voltage sampling value is greater than the preset cell voltage. When the voltage regulation condition is met, that is, the output voltage sampling value is greater than the preset cell voltage, the processor further performs a comparison analysis on the output voltage sampling value and the preset voltage threshold, where the preset voltage threshold is greater than the preset cell voltage. If the output voltage sampling value is between the preset cell voltage and the preset voltage threshold, pulse boost regulation is performed on the pulse boost circuit in the first regulation manner.

Step 108: Perform, according to the output voltage sampling value and the preset cell voltage if the output voltage sampling value is greater than the preset voltage threshold, pulse boost regulation on the pulse boost circuit in a second regulation manner.

Specifically, the second regulation manner is a regulation manner of the pulse boost circuit implemented according to the preset cell voltage. In the technical solutions of this application, if there is an excessively great difference between the output voltage sampling value and the preset cell voltage and the difference is greater than the preset voltage threshold, pulse boost regulation is performed on the pulse boost circuit in the second regulation manner. It may be understood that, in other embodiments, a plurality of different voltage thresholds may alternatively be set according to a magnitude of the output voltage sampling value greater than the preset cell voltage, to perform regulation of different manners. For example, in an embodiment, a first preset voltage threshold greater than the preset voltage threshold is further set based on the foregoing embodiments. When the output voltage sampling value is between the preset cell voltage and the preset voltage threshold, pulse boost regulation is performed in the first regulation manner. When the output voltage sampling value is between the preset voltage threshold and the first preset voltage threshold, pulse boost regulation is performed on the pulse boost circuit in the second regulation manner. When the output voltage sampling value is greater than the first preset voltage threshold, pulse boost regulation is performed on the pulse boost circuit in a third regulation manner.

In the foregoing solutions, in a case that the output voltage sampling value is greater than the preset cell voltage, pulse boost regulation is implemented in different regulation manners further with reference to a magnitude of the output voltage sampling value greater than the preset cell voltage, so that the output of the pulse boost circuit can be more rapidly adjusted as required, and the regulation efficiency of the pulse boost circuit can be improved.

In the foregoing electronic vaporization device, the pulse boost circuit is used to provide the voltage for the vaporizer, and the voltage regulation can be performed in real time according to a feedback value of the pulse boost circuit, so as to realize compensation for the output power (the taste of inhalation), and ensure the consistency of the tastes of inhalation before and after; a voltage output manner of pulse boost can alleviate a problem of low efficiency caused by continuous boost, and can increase the number of times of inhalation, thereby greatly improving the energy saving effect of the cell; an pulse boost output makes the output efficiency higher, and has lower requirements on performance of a device, so that a cheaper device can be selected to build the pulse boost circuit, thereby reducing costs; and in addition, the pulse boost manner has fewer requirements on performance of a device, and a device with a smaller size can be selected for packaging, so that the circuit occupies a smaller volume.

According to the foregoing method for controlling an electronic vaporization device, when a pulse boost circuit starts operation and provides an operating voltage for a vaporizer of an electronic vaporization device, an output voltage sampling value of the pulse boost circuit can be obtained in real time, and is analyzed with reference to a preset cell voltage, to determine whether a voltage regulation condition is met currently. If the output voltage sampling value is between the preset cell voltage and a preset voltage threshold, pulse boost regulation is performed on the pulse boost circuit in a first regulation manner; and if the output voltage sampling value is greater than the preset voltage threshold, pulse boost regulation is performed on the pulse boost circuit in a second regulation manner, to slow down the decreasing rate of output power outputted by the pulse boost circuit to the vaporizer. Through the foregoing solution, when a cell voltage of the electronic vaporization device is insufficient, the power loss of a cell can be effectively reduced by a feedback adjustment, thereby slowing down the decreasing rate of the output power, and avoiding a greater difference between working states of the electronic vaporization device before and after caused by a greater change in the output power.

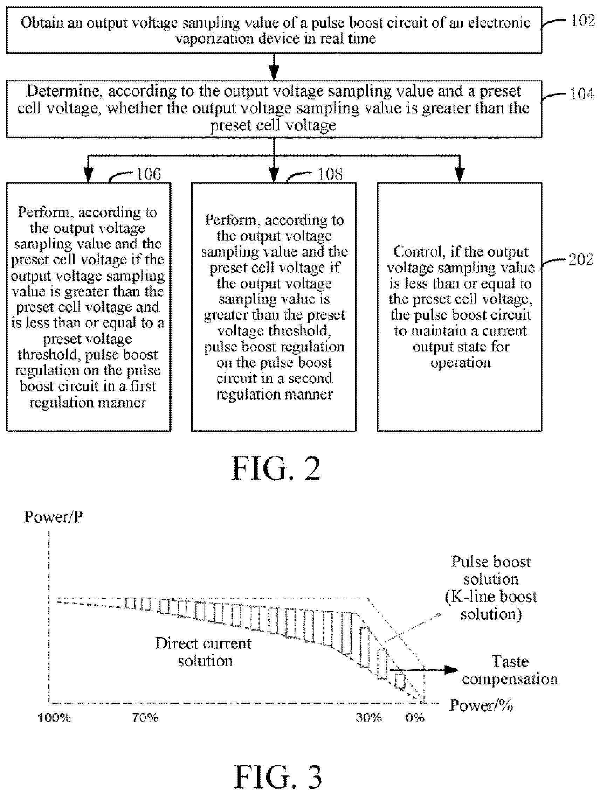

Referring to FIG. 2, in some embodiments, after step 104, the method further includes step 202.

Step 202: Control, if the output voltage sampling value is less than or equal to the preset cell voltage, the pulse boost circuit to maintain a current output state for operation.

Specifically, if there is a situation that the voltage regulation condition is not met when the processor analyzes with reference to the output voltage sampling value and the preset cell voltage, the cell voltage does not have a noticeable change, or a change in the cell voltage is not enough to cause a decrease in the output power and a change in the taste of inhalation in this case. Therefore, there is no need to adjust the output of the pulse boost circuit in this case. In this case, the pulse boost circuit only needs to maintain the current output state for operation, and outputs a voltage value corresponding to a current output voltage sampling value, to maintain operation of the vaporizer.

Through the solutions of the embodiments, when the cell voltage of the electronic vaporization device does not have a noticeable change, the pulse boost circuit can be directly controlled to maintain a current operating state, to reduce unnecessary pulse boost regulation, and save data processing resources, thereby effectively improving the operation reliability of the electronic vaporization device.

In some embodiments, the step of performing, according to the output voltage sampling value and the preset cell voltage, pulse boost regulation on the pulse boost circuit in a first regulation manner includes: controlling, according to the output voltage sampling value and the preset cell voltage, the pulse boost circuit to output a voltage signal corresponding to the preset cell voltage for a second preset duration after outputting a voltage signal corresponding to the output voltage sampling value for a first preset duration.

Specifically, an example in which two different regulation manners are implemented according to the output voltage sampling value is described above. When performing the pulse boost regulation corresponding to the first regulation manner, the processor analyzes according to the output voltage sampling value and the preset cell voltage, and outputs, after obtaining a pulse width modulation signal required to control the operation of the pulse boost circuit, the pulse width modulation signal to the pulse boost circuit, so that the pulse boost circuit outputs the voltage signal corresponding to the preset cell voltage for the second preset duration after outputting the voltage signal corresponding to the output voltage sampling value for the first preset duration. That is, within a voltage period, the pulse boost circuit first maintains that a voltage consistent with the output voltage sampling value is outputted for the vaporizer, and then changes to output a voltage consistent with the preset cell voltage to the vaporizer, thereby alleviating a change in the output power caused by a reduction of the cell voltage, and ensuring the taste of inhalation of the electronic vaporization device.

It should be noted that, lengths of the first preset duration and the second preset duration are not unique. In an embodiment, the first preset duration may be set to be greater than the second preset duration, that is, a voltage of the output voltage sampling value for a longer time is first outputted, and a voltage of the preset cell voltage for a shorter time is then outputted. Further, in a more detailed embodiment, the first preset duration may be set to 200ms, and the second preset duration may be set to 100ms.

It may be understood that, after the pulse width modulation signal is outputted to control the pulse boost circuit to output the voltage signal corresponding to the output voltage sampling value for the first preset duration, the implementation of outputting the voltage signal corresponding to the preset cell voltage for the second preset duration is not unique, and specific regulation implementations are also different according to different actual pulse boost circuits.

For ease of understanding, detailed descriptions are provided below with reference to a specific pulse boost circuit. The pulse boost circuit includes a first capacitor, a second capacitor, a first resistor, a second resistor, a first switch device, a second switch device, a third switch device, a first diode, a second diode, and a boost inductor. The first end of the first capacitor is connected to the power supply, the second end of the first capacitor is grounded, the first end of the first resistor is connected to the first end of the first capacitor and the first end of the first switch device, the second end of the first resistor is connected to the control end of the first switch device and the processor, the second end of the first switch device is connected to the cathode of the first diode and the first end of the boost inductor, the second end of the boost inductor is connected to the anode of the second diode and the first end of the second switch device, the control end of the second switch device is connected to the processor and the first end of the second resistor, the second end of the second resistor is connected to the anode of the first diode and the second end of the second switch device, the cathode of the second diode is connected to the first end of the second capacitor, the status acquisition apparatus, and the vaporizer, the second end of the second capacitor is connected to the first end of the third switch device, the second end of the third switch device is connected to the second end of the second switch device and the vaporizer, and the control end of the third switch device is connected to the processor.

Under the structure of the pulse boost circuit, when the processor conducts the second switch device after controlling the first switch device to be turned on, the voltage of the cell is fully applied to the boost inductor, electrical energy is stored in an inductor in the form of magnetic field energy, the first diode is cut off, and the load is powered by the second capacitor (essentially the energy storage capacitor) of the circuit. When the second switch device is switched off, stored energy of the cell and the inductor is transferred to the load and the second capacitor through the second diode, so as to charge the second capacitor. Therefore, after a PWM signal with a duty cycle is outputted to the second switch device, pulse boost regulation can be implemented.

To implement that the pulse boost circuit outputs the voltage signal corresponding to the preset cell voltage for the second preset duration after outputting the voltage signal corresponding to the output voltage sampling value for the first preset duration, the processor first outputs a signal (specifically, may output a low-level signal with a duty cycle of 0 when the first switch device is a PMOS) to the first switch device to control the first switch device to be turned on, and outputs a PWM signal with a duty cycle (which may specifically be calculated with reference to the output voltage sampling value) to the second switch device to control an action of the second switch device, and the process lasts for the first preset duration, so as to output a voltage corresponding to the output voltage sampling value; and the processor then outputs a signal (specifically, may output the low-level signal with the duty cycle of 0 when the first switch device is the PMOS) to the first switch device to control the first switch device to be turned on, and outputs a PWM signal (specifically, may output a low-level signal with the duty cycle of 0 when the second switch device is an NMOS) to the second switch device to control the second switch device to be switched off, and the process lasts for the second preset duration, so as to output a voltage corresponding to the preset cell voltage.

Referring to FIG. 3, when the power of the cell gradually reduces, the output power of the pulse boosting solution decreases more slowly than that of the direct current solution (that is, the above direct current chopper output). Through this solution, the output power of the pulse boost circuit can be compensated, which prevents a reduction of the cell voltage from causing a noticeable change in the output power and affecting the taste of inhalation, can also realize a cycle output of power and low power, and can simultaneously evaporate low flash point and high flash point substances in e-liquids, thereby improving the taste of inhalation.

In some embodiments, the step of performing, according to the output voltage sampling value and the preset cell voltage, pulse boost regulation on the pulse boost circuit in a second regulation manner includes: controlling, according to the output voltage sampling value and the preset cell voltage, the pulse boost circuit to output a voltage signal corresponding to the preset cell voltage for a fourth preset duration after outputting a voltage signal corresponding to the preset voltage threshold for a third preset duration.

Specifically, an example in which two different regulation manners are implemented according to the output voltage sampling value is similarly described above. When performing the pulse boost regulation corresponding to the second regulation manner, the processor analyzes according to the output voltage sampling value and the preset cell voltage, and outputs, after obtaining a pulse width modulation signal required to control the operation of the pulse boost circuit, the pulse width modulation signal to the pulse boost circuit, so that the pulse boost circuit outputs the voltage signal corresponding to the preset cell voltage for the fourth preset duration after outputting the voltage signal corresponding to the preset voltage threshold for the third preset duration. That is, within a voltage period, the pulse boost circuit first maintains that a voltage consistent with the preset voltage threshold is outputted for the vaporizer, and then changes to output a voltage consistent with the preset cell voltage to the vaporizer, thereby alleviating a change in the output power caused by a reduction of the cell voltage, and ensuring the taste of inhalation of the electronic vaporization device.

Similar to the foregoing first regulation manner, lengths of the third preset duration and the fourth preset duration are not unique. In an embodiment, the third preset duration may be set to be greater than the fourth preset duration, that is, a voltage of the preset voltage threshold for a longer time is first outputted, and a voltage of the preset cell voltage for a shorter time is then outputted. Further, in a more detailed embodiment, the third preset duration may be set to 200ms, and the fourth preset duration may be set to 100ms. Similarly, for the second regulation manner, specific regulation implementations are also different according to different actual pulse boost circuits, implementations thereof are the same as those of the first regulation manner, and an only difference is that duty cycles of pulse width modulation signals outputted by the processor are different. Details are not described herein again.

Similarly, through the solution of the foregoing embodiments, the output power of the pulse boost circuit can be compensated, which prevents a reduction of the cell voltage from causing a noticeable change in the output power and affecting the taste of inhalation, can also realize a cycle output of power and low power, and can simultaneously evaporate low flash point and high flash point substances in e-liquids, thereby improving the taste of inhalation.

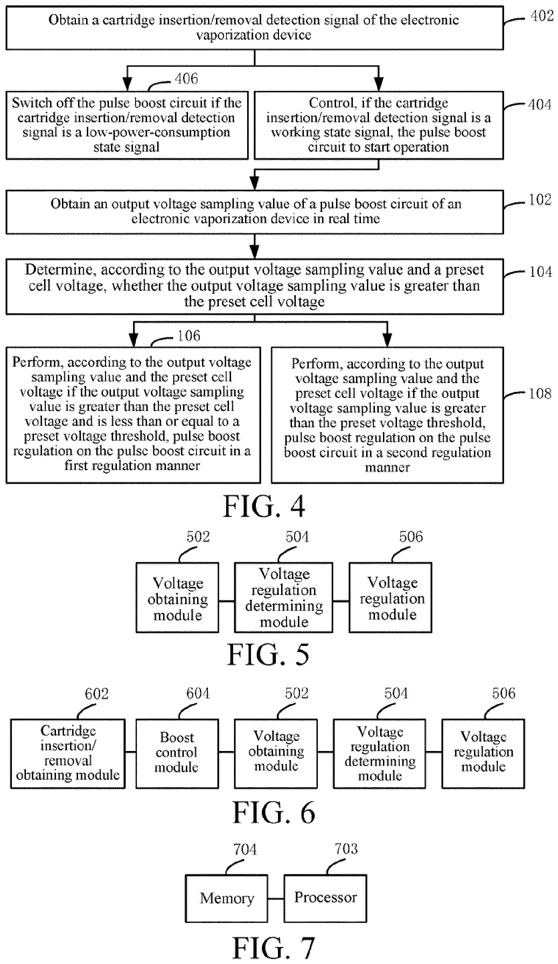

Referring to FIG. 4, in some embodiments, before step 102, the method further includes step 402 and step 404.

Step 402: Obtain a cartridge insertion/removal detection signal of the electronic vaporization device. Step 404: Control, if the cartridge insertion/removal detection signal is a working state signal, the pulse boost circuit to start operation. Afterward, the operation of obtaining an output voltage sampling value of a pulse boost circuit of an electronic vaporization device in real time is performed.

Specifically, a cartridge is a device configured to store e-liquids in the electronic vaporization device. During use, the cartridge needs to be inserted into the vaporizer of the electronic vaporization device, and the e-liquids contained in the cartridge may be guided into a vaporization tank of the vaporizer. Afterward, when a heating wire of the vaporizer is heated after powered on, smoke is generated for a user to inhale.

In the solution of the embodiments, in addition to having an output voltage sampling function, the status acquisition apparatus can also implement cartridge insertion/removal detection on the electronic vaporization device. After the cartridge is inserted into or removed from the electronic vaporization device, the status acquisition apparatus detects this status change, and transmits a corresponding signal to the processor, so as to obtain the cartridge insertion/removal detection signal. Afterward, the processor analyzes, according to a specific form of the cartridge insertion/removal detection signal, whether the cartridge is in an inserted state or the cartridge has been removed in this case.

If the cartridge insertion/removal detection signal is the working state signal, it indicates that the cartridge is in the inserted state in this case, and in this case, the processor triggers and controls the pulse boost circuit to be started, so that a voltage signal can be outputted to the vaporizer in time when the user has an inhalation requirement, so that the e-liquids are evaporated to generate smoke.

Still referring to FIG. 4, in some embodiments, after step 402, the method further includes step 406.

Step 406: Switch off the pulse boost circuit if the cartridge insertion/removal detection signal is a low-power-consumption state signal.

Specifically, when the processor analyzes according to the received cartridge insertion/removal detection signal, a state in which the cartridge is not inserted also exists, and in this case, it is considered that the received cartridge insertion/removal detection signal is the low-power-consumption state signal. In this case, the processor controls the pulse boost circuit to be switched off, and stops a voltage output, so as to enter a low-power-consumption operating state. Through this solution, the voltage output can be stopped in a case that there is no cartridge, thereby avoiding a waste of electrical energy, and effectively increasing the endurance time of the electronic vaporization device.

It should be noted that, a specific type of the status acquisition apparatus is not unique, and corresponding cartridge insertion/removal detection signals are also different according to different types thereof. In a more detailed embodiment, the status acquisition apparatus may specifically include a fourth resistor and a fifth resistor, the first end of the fourth resistor is connected to the power supply, the second end of the fourth resistor is connected to the first end of the second capacitor, the status acquisition apparatus, and the vaporizer, the first end of the fifth resistor is connected to the status acquisition apparatus, and the second end of the fifth resistor is connected to the processor.

When the second end of the fourth resistor, the first end of the second capacitor, and the status acquisition apparatus are connected to the vaporizer, the second end of the fourth resistor, the first end of the second capacitor, and the status acquisition apparatus may be specifically connected to a spring pin at a lower housing of the electronic vaporization device through conducting wires, and a voltage input is performed for the vaporizer through the spring pin. In addition, the spring pin may further be connected to an ejector pin on the cartridge, so that different signal changes can be detected at the spring pin according to insertion/removal of the cartridge.

When the cartridge is inserted, because a resistance value of the fourth resistor is larger and a resistance value of the cartridge is very small, there is a low level at the spring pin; and when the cartridge is removed, because of the provided fourth resistor, there is a high level at the spring pin. When the processor enters low power consumption, the insertion/removal of the cartridge causes a level change at the spring pin, and the change is transmitted to the processor, so that the processor is waked up to enter a working mode from a low-power-consumption mode, and cartridge insertion/removal detection can be implemented in real time. The processor outputs, in the working mode, a PWM signal to control the pulse boost circuit to start operation, and controls, in the low-power-consumption mode, the pulse boost circuit to stop the operation.

In the foregoing solution, the status acquisition apparatus occupies less devices and has low costs, and energy storage control of the second capacitor and pull-up control of the fourth resistor can be realized only by the second switch device of the pulse boost circuit; requirements for components are lower, which can save costs and reduce design material costs; and smaller components for packaging and simple circuits are used, which can reduce a design area of a circuit board, and make an overall volume become smaller, thereby facilitating the miniaturized design of the electronic vaporization device.

To make the technical solutions in this application more comprehensible, the following describes with reference to most detailed embodiments. A status acquisition apparatus is disposed between a pulse boost circuit and a vaporizer, and a processor is connected to the sampling circuit. First, the processor receives a cartridge insertion/removal detection signal from the status acquisition apparatus; directly switches off, if the cartridge insertion/removal detection signal is a low-power-consumption state signal, the pulse boost circuit, and enters a low-power-consumption state; and
controls, if the cartridge insertion/removal detection signal is a working state signal, the pulse boost circuit to start operation, and provides a voltage for the vaporizer in a manner of pulse boost. In this case, the status acquisition apparatus acquires an output voltage sampling value to the processor in real time. If the output voltage sampling value is greater than a preset cell voltage and is less than or equal to a preset voltage threshold, the processor controls the pulse boost circuit to first output a voltage corresponding to an output voltage sampling value of 200ms and then output a voltage corresponding to a preset cell voltage of 100ms within a voltage period, and then returns to obtaining the output voltage sampling value and analyzes again. If the output voltage sampling value is greater than the preset voltage threshold, the processor controls the pulse boost circuit to first output a voltage corresponding to a preset voltage threshold of 200ms and then output a voltage corresponding to a preset cell voltage of 100ms within a voltage period, and then returns to obtaining the output voltage sampling value and analyzes again.

Referring to FIG. 5, an apparatus for controlling an electronic vaporization device is provided, and includes a voltage obtaining module 502, a voltage regulation determining module 504, and a voltage regulation module 506.

The voltage obtaining module 502 is configured to obtain an output voltage sampling value of a pulse boost circuit of an electronic vaporization device in real time. The voltage regulation determining module 504 is configured to determine, according to the output voltage sampling value and a preset cell voltage, whether the output voltage sampling value is greater than the preset cell voltage. The voltage regulation module 506 is configured to perform, according to the output voltage sampling value and the preset cell voltage if the output voltage sampling value is greater than the preset cell voltage and is less than or equal to a preset voltage threshold, pulse boost regulation on the pulse boost circuit in a first regulation manner; and perform, according to the output voltage sampling value and the preset cell voltage if the output voltage sampling value is greater than the preset voltage threshold, pulse boost regulation on the pulse boost circuit in a second regulation manner.

In some embodiments, the voltage regulation module 506 is configured to control, if the output voltage sampling value is less than or equal to the preset cell voltage, the pulse boost circuit to maintain a current output state for operation.

In some embodiments, the voltage regulation module 506 is configured to control, according to the output voltage sampling value and the preset cell voltage, the pulse boost circuit to output a voltage signal corresponding to the preset cell voltage for a second preset duration after outputting a voltage signal corresponding to the output voltage sampling value for a first preset duration.

In some embodiments, the voltage regulation module 506 is configured to control, according to the output voltage sampling value and the preset cell voltage, the pulse boost circuit to output a voltage signal corresponding to the preset cell voltage for a fourth preset duration after outputting a voltage signal corresponding to the preset voltage threshold for a third preset duration.

Referring to FIG. 6, in some embodiments, before the voltage obtaining module 502, the apparatus further includes a cartridge insertion/removal obtaining module 602 and a boost control module 604. The cartridge insertion/removal obtaining module 602 is configured to obtain a cartridge insertion/removal detection signal of the electronic vaporization device. The boost control module 604 is configured to control, if the cartridge insertion/removal detection signal is a working state signal, the pulse boost circuit to start operation. Afterward, the voltage obtaining module 502 is controlled to perform the operation of obtaining an output voltage sampling value of a pulse boost circuit of an electronic vaporization device in real time.

In some embodiments, the boost control module 604 is further configured to switch off the pulse boost circuit if the cartridge insertion/removal detection signal is a low-power-consumption state signal.

According to the foregoing apparatus for controlling the electronic vaporization device, when a pulse boost circuit starts operation and provides an operating voltage for a vaporizer of an electronic vaporization device, an output voltage sampling value of the pulse boost circuit can be obtained in real time, and is analyzed with reference to a preset cell voltage, to determine whether a voltage regulation condition is met currently. If the output voltage sampling value is between the preset cell voltage and a preset voltage threshold, pulse boost regulation is performed on the pulse boost circuit in a first regulation manner; and if the output voltage sampling value is greater than the preset voltage threshold, pulse boost regulation is performed on the pulse boost circuit in a second regulation manner, to slow down the decreasing rate of output power outputted by the pulse boost circuit to the vaporizer. Through the foregoing solution, when a cell voltage of the electronic vaporization device is insufficient, the power loss of a cell can be effectively reduced by a feedback adjustment, thereby slowing down the decreasing rate of the output power, and avoiding a greater difference between working states of the electronic vaporization device before and after caused by a greater change in the output power.

For a specific limitation on the apparatus for controlling an electronic vaporization device, reference may be made to the limitation on the foregoing method for controlling an electronic vaporization device. Details are not described herein again. The modules in the foregoing apparatus for controlling an electronic vaporization device may be implemented entirely or partially by software, hardware, or combinations thereof. The foregoing modules may be built in or independent of a processor of a computer device in a hardware form, or may be stored in a memory of the computer device in a software form, so that the processor invokes and performs an operation corresponding to each of the foregoing modules.

Referring to FIG. 7, a system for controlling an electronic vaporization device is provided, including a memory 704 and a processor 703, the memory 704 storing a computer program, and the processor 703, when executing the computer program, implementing steps of the following method for controlling an electronic vaporization device: obtaining an output voltage sampling value of a pulse boost circuit of an electronic vaporization device in real time; determining whether the output voltage sampling value is greater than a preset cell voltage; performing, according to the output voltage sampling value and the preset cell voltage if the output voltage sampling value is greater than the preset cell voltage and is less than or equal to a preset voltage threshold, pulse boost regulation on the pulse boost circuit in a first regulation manner; and performing, according to the output voltage sampling value and the preset cell voltage if the output voltage sampling value is greater than the preset voltage threshold, pulse boost regulation on the pulse boost circuit in a second regulation manner.

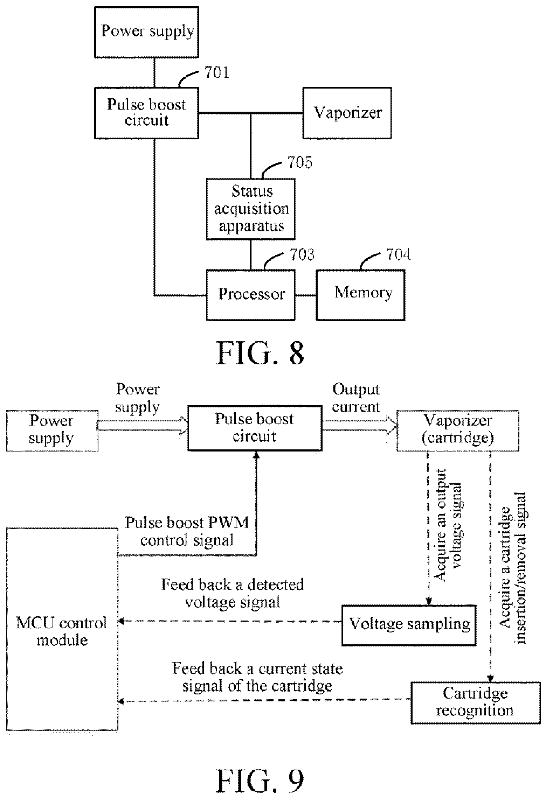

Specific implementation processes of the method for controlling an electronic vaporization device are shown in the foregoing embodiments and accompanying drawings, and details are not repeated herein again. Referring to FIG. 8, in some embodiments, the system for controlling an electronic vaporization device further includes a pulse boost circuit 701, where the processor 703, a vaporizer of an electronic vaporization device, and a power supply of the electronic vaporization device are respectively connected to the pulse boost circuit 701.

Specifically, referring to FIG. 9, the power supply is connected to a vaporizer of the electronic vaporization device through the pulse boost circuit 701, to provide electrical energy required for the vaporizer to work, so as to ensure that the vaporizer can normally vaporize. For the power supply (namely, a cell) connected to the pulse boost circuit 701, because power of the cell gradually reduces as a working time of the electronic vaporization device increases, if an operating state of the pulse boost circuit 701 remains unchanged, a voltage finally transmitted to the vaporizer also reduces accordingly, resulting in a more obvious change in output power, so that the taste of inhalation is affected.

To avoid this situation, in the technical solutions of this application, in a process in which the pulse boost circuit 701 outputs a voltage to supply power to the vaporizer, a feedback adjustment can be performed with reference to the output voltage sampling value of the pulse boost circuit 701, so as to prevent the output power from having a noticeable change when the voltage sampling value has a noticeable change, and ensure that tastes of inhalation of the electronic vaporization device before and after are consistent.

After obtaining the output voltage sampling value outputted by the pulse boost circuit 701 to the vaporizer, the processor 703 analyzes with reference to the stored preset cell voltage, to determine whether the voltage regulation condition is met (whether the output voltage sampling value is greater than the preset cell voltage), that is, determine whether a greater difference between tastes of inhalation before and after is caused when the cell voltage has a greater change as the use time of the electronic vaporization device increases. If the analysis shows that the output voltage sampling value meets the voltage regulation condition, it indicates that a reduction of the cell voltage in this case causes a change in the taste of inhalation. If the analysis shows that the output voltage sampling value does not meet the voltage regulation condition, it indicates that, in this case, the cell voltage has no change, or the cell voltage has a small change, which is not enough to cause a change in the taste of inhalation of the electronic vaporization device.

When the processor 703 analyzes with reference to the output voltage sampling value and the preset cell voltage to determine whether the voltage regulation condition is met, if the analysis shows that the voltage regulation condition is met, that is, the analysis shows that a change in the taste of inhalation is caused when the cell voltage reduces because the use time of the current cell increases, the processor 703 performs pulse boost regulation on the pulse boost circuit 701, to slow down the decreasing rate of the output power of the pulse boost circuit 701, and ensure the consistency of the tastes of inhalation of the electronic vaporization device before and after.

It should be noted that, a specific type of the processor 703 is not unique, and in a more detailed embodiment, may be implemented by using a microcontroller unit (MCU).

It may be understood that, in an embodiment, to ensure that the decreasing rate of the output power of the pulse boost circuit 701 can be slowed down in time by a feedback adjustment each time the cell voltage changes, after performing pulse boost regulation once each time, the processor 703 returns to the operation of obtaining an output voltage sampling value of a pulse boost circuit 701, then analyzes whether the voltage regulation condition is met, and performs pulse boost regulation again if the voltage regulation condition is met again.

According to the foregoing system for controlling the electronic vaporization device, when a pulse boost circuit 701 starts operation and provides an operating voltage for a vaporizer of an electronic vaporization device, an output voltage sampling value of the pulse boost circuit 701 can be obtained in real time, and is analyzed with reference to a preset cell voltage, to determine whether a voltage regulation condition is met currently. If the output voltage sampling value is between the preset cell voltage and the preset voltage threshold, pulse boost regulation is performed on the pulse boost circuit 701 in the first regulation manner; and if the output voltage sampling value is greater than the preset voltage threshold, pulse boost regulation is performed on the pulse boost circuit 701 in a second regulation manner, to slow down the decreasing rate of output power outputted by the pulse boost circuit 701 to the vaporizer. Through the foregoing solution, when a cell voltage of the electronic vaporization device is insufficient, the power loss of a cell can be effectively reduced by a feedback adjustment, thereby slowing down the decreasing rate of the output power, and avoiding a greater difference between working states of the electronic vaporization device before and after caused by a greater change in the output power.

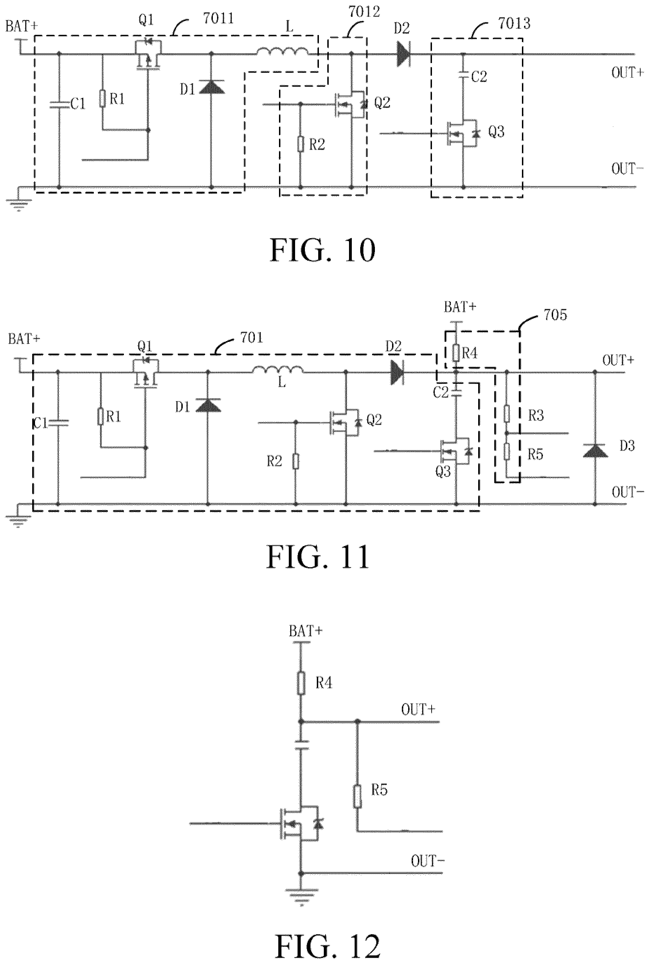

Referring to FIG. 10, in some embodiments, the pulse boost circuit 701 includes a boost circuit 7011, a pulse control circuit 7012, and an energy storage circuit 7013, the boost circuit 7011 is connected to the power supply of the electronic vaporization device, the boost circuit 7011 is connected to the pulse control circuit 7012, the pulse control circuit 7012 is connected to the energy storage circuit 7013, the energy storage circuit 7013 is connected to the vaporizer of the electronic vaporization device, and the boost circuit 7011, the pulse control circuit 7012, and the energy storage circuit 7013 are respectively connected to the processor.

Specifically, a specific structure of the pulse boost circuit 701 is not unique. In the solution of the embodiments, the pulse boost circuit 701 includes three parts: the boost circuit 7011, the pulse control circuit 7012, and the energy storage circuit 7013, and the three parts are all connected to the processor. Under control of the processor, an appropriate voltage can be outputted to the vaporizer of the electronic vaporization device, to control the electronic vaporization device to start vaporization.

It should be noted that, specific structures of the boost circuit 7011, the pulse control circuit 7012, and the energy storage circuit 7013 are also not unique. Referring to FIG. 10, in some embodiments, the boost circuit 7011 includes a first capacitor C1, a first resistor R1, a first switch device Q 1, a first diode D 1, and a boost inductor L, the first end of the first capacitor C1 is connected to the power supply of the electronic vaporization device, the second end of the first capacitor C1 is grounded, the first end of the first resistor R1 is connected to the first end of the first capacitor C1 and the first end of the first switch device Q1, the second end of the first resistor R1 is connected to the control end of the first switch device Q1 and the processor, the second end of the first switch device Q1 is connected to the cathode of the first diode D 1 and the first end of the boost inductor L, the second end of the boost inductor L is connected to the pulse control circuit 7012, and the anode of the first diode D 1 is connected to the second end of the first capacitor C1 and the pulse control circuit 7012. In a case that the processor controls the first switch device Q1 to be turned on, the voltage outputted by the power supply (namely, the cell) of the electronic vaporization device is applied to the boost inductor L.

Referring to FIG. 10, in some embodiments, the pulse control circuit 7012 includes a second resistor R2, a second switch device Q2, and a second diode D2, the first end of the second switch device Q2 is connected to the boost circuit 7011 and the anode of the second diode D2, the cathode of the second diode D2 is connected to the energy storage circuit 7013, the control end of the second switch device Q2 is connected to the first end of the second resistor R2 and the processor, the second end of the second resistor R2 is connected to the boost circuit 7011 and the second end of the second switch device Q2, and the second end of the second switch device Q2 is connected to the energy storage circuit 7013.

When the second switch device Q2 is turned on, electrical energy of the boost circuit 7011 is stored in the boost inductor L in the form of magnetic field energy, and when the second switch device Q2 is switched off, the voltage of the power supply and stored energy of an energy storage inductor are transferred to the load and the energy storage circuit 7013 through the second diode D2, so as to charge the energy storage circuit 7013. A duty cycle of the second switch device Q2 is adjusted, so that a final output voltage of the pulse boost circuit 701 can be changed.

Referring to FIG. 10, in some embodiments, the energy storage circuit 7013 includes a second capacitor C2 and a third switch device Q3, the first end of the second capacitor C2 is connected to the pulse control circuit 7012 and the vaporizer of the electronic vaporization device, the second end of the second capacitor C2 is connected to the first end of the third switch device Q3, the second end of the third switch device Q3 is connected to the pulse control circuit 7012 and the vaporizer, and the control end of the third switch device Q3 is connected to the processor. When the second switch device Q2 is switched off, the voltage of the power supply and stored energy of an energy storage inductor are transferred to the load and the energy storage circuit 7013 through the second diode D2, so as to charge the second capacitor C2 in the energy storage circuit 7013.

In a more detailed embodiment, the pulse boost circuit 701 includes a first capacitor C1, a second capacitor C2, a first resistor R1, a second resistor R2, a first switch device Q1, a second switch device Q2, a third switch device Q3, a first diode D1, a second diode D2, and a boost inductor L.

Under the structure of the pulse boost circuit 701, when the processor 703 conducts the second switch device Q2 after controlling the first switch device Q1 to be turned on, the voltage of the cell is fully applied to the boost inductor L, electrical energy is stored in an inductor in the form of magnetic field energy, the first diode D1 is cut off, and the load is powered by the second capacitor C2 (essentially the energy storage capacitor) of the circuit. When the second switch device Q2 is switched off, stored energy of the cell and the inductor is transferred to the load and the second capacitor C2 through the second diode D2, so as to charge the second capacitor C2. Therefore, after a PWM signal with a duty cycle is outputted to the second switch device Q2, pulse boost regulation can be implemented.

To implement that the pulse boost circuit 701 outputs the voltage signal corresponding to the preset cell voltage for the second preset duration after outputting the voltage signal corresponding to the output voltage sampling value for the first preset duration, the processor 703 first outputs a signal (specifically, may output a low-level signal with a duty cycle of 0 when the first switch device Q1 is a PMOS) to the first switch device Q1 to control the first switch device Q1 to be turned on, and outputs a PWM signal with a duty cycle (which may specifically be calculated with reference to the output voltage sampling value) to the second switch device Q2 to control an action of the second switch device Q2, and the process lasts for the first preset duration, so as to output a voltage corresponding to the output voltage sampling value; and the processor 703 then outputs a signal (specifically, may output the low-level signal with the duty cycle of 0 when the first switch device Q1 is the PMOS) to the first switch device Q1 to control the first switch device Q1 to be turned on, and outputs a PWM signal (specifically, may output a low-level signal with the duty cycle of 0 when the second switch device Q2 is an NMOS) to the second switch device Q2 to control the second switch device Q2 to be switched off, and the process lasts for the second preset duration, so as to output a voltage corresponding to the preset cell voltage.

In some embodiments, referring to FIG. 8, the system for controlling an electronic vaporization device further includes a status acquisition apparatus 705, where the pulse boost circuit 701 is connected to the vaporizer of the electronic vaporization device and the status acquisition apparatus 705, the status acquisition apparatus 705 is connected to the processor 703, and the status acquisition apparatus 705 is configured to acquire an output voltage sampling value of the pulse boost circuit 701.

Specifically, in the technical solutions of the embodiments, the status acquisition apparatus 705 configured to acquire the output voltage sampling value is disposed between the pulse boost circuit 701 and the vaporizer, so that the processor 703 can perform corresponding regulation in time with reference to the output voltage sampling value when power of the cell changes.

Further, in some embodiments, the status acquisition apparatus 705 is further configured to acquire a cartridge insertion/removal detection signal, and send the cartridge insertion/removal detection signal to the processor 703.

Specifically, referring to FIG. 9, after the cartridge is inserted into or removed from the electronic vaporization device, the status acquisition apparatus 705 detects this status change, and transmits a corresponding signal to the processor 703, so as to obtain the cartridge insertion/removal detection signal. Afterward, the processor 703 analyzes, according to a specific form of the cartridge insertion/removal detection signal, whether the cartridge is in an inserted state or the cartridge has been removed in this case.

If the cartridge insertion/removal detection signal is the working state signal, it indicates that the cartridge is in the inserted state in this case, and in this case, the processor 703 triggers and controls the pulse boost circuit 701 to be started, so that a voltage signal can be outputted to the vaporizer in time when the user has an inhalation requirement, so that the e-liquids are evaporated to generate smoke.

When the processor 703 analyzes according to the received cartridge insertion/removal detection signal, a state in which the cartridge is not inserted also exists, and in this case, it is considered that the received cartridge insertion/removal detection signal is the low-power-consumption state signal. In this case, the processor 703 controls the pulse boost circuit 701 to be switched off, and stops a voltage output, so as to enter a low-power-consumption operating state. Through this solution, the voltage output can be stopped in a case that there is no cartridge, thereby avoiding a waste of electrical energy, and effectively increasing the endurance time of the electronic vaporization device.

Referring to FIG. 11, the status acquisition apparatus 705 includes a third resistor R3, a fourth resistor R4, and a fifth resistor R5, the first end of the fourth resistor R4 is connected to the power supply, the second end of the fourth resistor R4 is connected to the pulse boost circuit 701 (specifically connected to the first end of the second capacitor C2), the third resistor R3, and the vaporizer, the second end of the third resistor R3 is connected to the processor 703 and the first end of the fifth resistor, and the second end of the fifth resistor R5 is connected to the processor 703.

Specifically, referring to FIG. 12, in the status acquisition apparatus 705, the third resistor R3 is used as a voltage sampling resistor to implement an output voltage sampling function, and the fourth resistor R4 and the fifth resistor R5 jointly form a cartridge detection part to implement cartridge insertion/removal detection. When the second end of the fourth resistor R4 and the first end of the third capacitor R3 are connected to the vaporizer, the second end of the fourth resistor and the first end of the third capacitor may specifically be connected to a spring pin at a lower housing of the electronic vaporization device through conducting wires, and a voltage input is performed for the vaporizer through the spring pin. In addition, the spring pin may further be connected to an ejector pin on the cartridge, so that different signal changes can be detected at the spring pin according to insertion/removal of the cartridge.

When the cartridge is inserted, because a resistance value of the fourth resistor R4 is larger and a resistance value of the cartridge is very small, there is a low level at the spring pin; and when the cartridge is removed, because of the provided fourth resistor R4, there is a high level at the spring pin. When the processor 703 enters low power consumption, the insertion/removal of the cartridge causes a level change at the spring pin, and the change is transmitted to the processor 703, so that the processor 703 is waked up to enter a working mode from a low-power-consumption mode, and cartridge insertion/removal detection can be implemented in real time. The processor 703 outputs, in the working mode, a PWM signal to control the pulse boost circuit 701 to start operation, and controls, in the low-power-consumption mode, the pulse boost circuit 701 to stop the operation.

In the foregoing solution, less devices are occupied and costs are low, and energy storage control of the second capacitor C2 and pull-up control of the fourth resistor R4 can be realized only by the second switch device Q2 of the pulse boost circuit 701; requirements for components are lower, which can save costs and reduce design material costs; and smaller components for packaging and simple circuits are used, which can reduce a design area of a circuit board, and make an overall volume become smaller, thereby facilitating the miniaturized design of the electronic vaporization device.

Still further, in an embodiment, referring to FIG. 11, the system for controlling an electronic vaporization device further includes a third diode D3, the cathode of the third diode D3 is connected to the first end of the third resistor R3 and the vaporizer, and the anode of the third diode D3 is connected to the second end of the third switch device. The third diode D3 is disposed, which can prevent reverse transmission of a current, and further ensure the operation reliability of the electronic vaporization device.

An electronic vaporization device is provided, including a vaporizer and the foregoing system for controlling an electronic vaporization device.

Specifically, the specific structure of the system for controlling an electronic vaporization device is shown in the foregoing embodiments and accompanying drawings, and details are not repeated herein again. In the apparatus for controlling an electronic vaporization device provided in this application, in a process in which a pulse boost circuit 701 starts operation and provides an operating voltage for a vaporizer of an electronic vaporization device, an output voltage sampling value of the pulse boost circuit 701 can be obtained in real time, and is analyzed with reference to a preset cell voltage, to determine whether a voltage regulation condition is met currently. If the output voltage sampling value is between the preset cell voltage and the preset voltage threshold, pulse boost regulation is performed on the pulse boost circuit 701 in the first regulation manner; and if the output voltage sampling value is greater than the preset voltage threshold, pulse boost regulation is performed on the pulse boost circuit 701 in a second regulation manner, to slow down the decreasing rate of output power outputted by the pulse boost circuit 701 to the vaporizer. Through the foregoing solution, when a cell voltage of the electronic vaporization device is insufficient, the power loss of a cell can be effectively reduced by a feedback adjustment, thereby slowing down the decreasing rate of the output power, and avoiding a greater difference between working states of the electronic vaporization device before and after caused by a greater change in the output power.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only show several implementations of this application, and descriptions thereof are in detail, but are not to be understood as a limitation to the patent scope of this application. A person of ordinary skill in the art may further make several variations and improvements without departing from the ideas of this application, and such variations and improvements all fall within the protection scope of this application. Therefore, the protection scope of this application is subject to the protection scope of the appended claims.

## Claims

1. A method for controlling an electronic vaporization device, comprising:
obtaining an output voltage sampling value of a pulse boost circuit of an electronic vaporization device in real time (102);
determining, according to the output voltage sampling value and a preset cell voltage, whether the output voltage sampling value is greater than the preset cell voltage (104);
performing, according to the output voltage sampling value and the preset cell voltage if the output voltage sampling value is greater than the preset cell voltage and is less than or equal to a preset voltage threshold, pulse boost regulation on the pulse boost circuit in a first regulation manner (106); and
performing, according to the output voltage sampling value and the preset cell voltage if the output voltage sampling value is greater than the preset voltage threshold, pulse boost regulation on the pulse boost circuit in a second regulation manner (108).

2. The method of claim 1, wherein performing, according to the output voltage sampling value and the preset cell voltage, pulse boost regulation on the pulse boost circuit in the first regulation manner comprises:
controlling, according to the output voltage sampling value and the preset cell voltage, the pulse boost circuit to output a voltage signal corresponding to the preset cell voltage for a second preset duration after outputting a voltage signal corresponding to the output voltage sampling value for a first preset duration.

3. The method of claim 1 or 2, wherein performing, according to the output voltage sampling value and the preset cell voltage, pulse boost regulation on the pulse boost circuit in the second regulation manner comprises:
controlling, according to the output voltage sampling value and the preset cell voltage, the pulse boost circuit to output a voltage signal corresponding to the preset cell voltage for a fourth preset duration after outputting a voltage signal corresponding to the preset voltage threshold for a third preset duration.

4. The method of any one of claims 1 to 3, wherein, before obtaining the output voltage sampling value of the pulse boost circuit of the electronic vaporization device in real time, the method further comprises:
obtaining a cartridge insertion/removal detection signal of the electronic vaporization device (402); and
controlling, if the cartridge insertion/removal detection signal is a working state signal, the pulse boost circuit to start operation (404), and performing the obtaining the output voltage sampling value of the pulse boost circuit of the electronic vaporization device in real time.

5. The method of claim 4, wherein, after obtaining the cartridge insertion/removal detection signal of the electronic vaporization device, the method further comprises:
switching off the pulse boost circuit if the cartridge insertion/removal detection signal is a low-power-consumption state signal (406).

6. An apparatus for controlling an electronic vaporization device, comprising:
a voltage obtaining module (502) configured to obtain an output voltage sampling value of a pulse boost circuit of the electronic vaporization device in real time;
a voltage regulation determining module (504) configured to determine whether the output voltage sampling value is greater than a preset cell voltage; and
a voltage regulation module (506) configured to: perform, according to the output voltage sampling value and a preset cell voltage if the output voltage sampling value is greater than the preset cell voltage and is less than or equal to a preset voltage threshold, pulse boost regulation on the pulse boost circuit in a first regulation manner, and perform, according to the output voltage sampling value and the preset cell voltage if the output voltage sampling value is greater than the preset voltage threshold, pulse boost regulation on the pulse boost circuit in a second regulation manner.

7. A system for controlling an electronic vaporization device, the system comprising a memory (704) and a processor (703), the memory (704) storing a computer program, and the processor, wherein the processor (703), when executing the computer program, implements the method for controlling the electronic vaporization device of any one of claims 1 to 5.

8. The system of claim 7, further comprising a pulse boost circuit (701), wherein the processor (703), a power supply of the electronic vaporization device, and a vaporizer of the electronic vaporization device are respectively connected to the pulse boost circuit (701).

9. The system of claim 8, wherein the pulse boost circuit comprises a boost circuit, a pulse control circuit, and an energy storage circuit,
wherein the boost circuit is connected to the power supply of the electronic vaporization device,
wherein the boost circuit is connected to the pulse control circuit,
wherein the pulse control circuit is connected to the energy storage circuit,
wherein the energy storage circuit is connected to the vaporizer of the electronic vaporization device, and
wherein the boost circuit, the pulse control circuit, and the energy storage circuit are respectively connected to the processor (703).

10. The system of claim 9, wherein the boost circuit (701) comprises a first capacitor, a first resistor, a first switch device, a first diode, and a boost inductor,
wherein a first end of the first capacitor is connected to the power supply of the electronic vaporization device, and a second end of the first capacitor is grounded,
wherein a first end of the first resistor is connected to the first end of the first capacitor and a first end of the first switch device, and a second end of the first resistor is connected to a control end of the first switch device and the processor (703),
wherein a second end of the first switch device is connected to a cathode of the first diode and a first end of the boost inductor, and a second end of the boost inductor is connected to the pulse control circuit, and
wherein an anode of the first diode is connected to the second end of the first capacitor and the pulse control circuit.

11. The system of claim 9 or 10, wherein the pulse control circuit comprises a second resistor, a second switch device, and a second diode,
wherein a first end of the second switch device is connected to the boost circuit and an anode of the second diode,
wherein a cathode of the second diode is connected to the energy storage circuit, wherein a control end of the second switch device is connected to a first end of the second resistor and the processor (703),
wherein a second end of the second resistor is connected to the boost circuit and a second end of the second switch device, and
wherein a second end of the second switch device is connected to the energy storage circuit.

12. The system of any one of claims 9 to 11, wherein the energy storage circuit comprises a second capacitor and a third switch device,
wherein a first end of the second capacitor is connected to the pulse control circuit and a vaporizer of the electronic vaporization device,
wherein a second end of the second capacitor is connected to a first end of the third switch device,
wherein a second end of the third switch device is connected to the pulse control circuit and the vaporizer, and
wherein a control end of the third switch device is connected to the processor (703).

13. The system of any one of claims 8 to 12, further comprising a status acquisition apparatus (705),
wherein the pulse boost circuit (701) is connected to the status acquisition apparatus (705) and the vaporizer,
wherein the status acquisition apparatus (705) is connected to the processor (703), wherein the status acquisition apparatus (705) is configured to acquire an output voltage sampling value of the pulse boost circuit (701), and
wherein the state acquisition device (705) is further configured to acquire a cartridge insertion/removal detection signal, and send the cartridge insertion/removal detection signal to the processor (703).

14. The system of claim 13, wherein the status acquisition apparatus (705) comprises a third resistor, a fourth resistor, and a fifth resistor,
wherein a first end of the fourth resistor is connected to the power supply,
wherein a second end of the fourth resistor is connected to the pulse boost circuit, a first end of the third resistor, and the vaporizer,
wherein a second end of the third resistor is connected to the processor and a first end of the fifth resistor, and
wherein a second end of the fifth resistor is connected to the processor.

15. An electronic vaporization device, comprising a vaporizer and the system of any one of claims 7 to 14.
